# EUROPÄISCHE PATENTSCHRIFT

(11) **EP 2 585 735 B1**
(45) Veröffentlichungstag und Bekanntmachung des Hinweises auf die Patenterteilung: **14.08.2019**
(21) Anmeldenummer: 11809297.2
(22) Anmeldetag: 22.06.2011
(51) Int. Cl.: F16F 9/02, F16F 9/32, F16F 9/43

(54) **PNEUMATISCHE VERZÖGERUNGSVORRICHTUNG MIT KONSTANTER LEISTUNG**
PNEUMATIC DECELERATION DEVICE HAVING CONSTANT POWER
DISPOSITIF RALENTISSEUR PNEUMATIQUE À PUISSANCE CONSTANTE

(30) Priorität: 24.06.2010 DE 102010024994
(43) Veröffentlichungstag der Anmeldung: 01.05.2013
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2011/001356
(87) Internationale Veröffentlichungsnummer: WO 2012/010136

(56) Entgegenhaltungen:
- EP-A2- 0 291 469
- EP-A2- 0 343 335
- DE-U1- 20 122 569
- US-A- 5 697 477
- US-A1- 2004 032 068

## Beschreibung

Die Erfindung betrifft eine pneumatische Verzögerungsvorrichtung mit einem Zylinder und mit einem in diesem mittels einer von einer Kolbenstangendichtung mit einer in Richtung eines Kolbenstangenkopfes zeigenden Dichtlippe umgriffenen Kolbenstange geführten, mit mindestens einem Kolbendichtelement ausgestatteten, einen Verdrängungsraum gegen einen Ausgleichsraum abgrenzenden Kolben, die durch Überdruck im Verdrängungsraum und Unterdruck im Ausgleichsraum eine der Hubbewegung des Kolbens entgegengesetzte Kraft aufbaut, wobei der Leckagestrom zwischen dem Verdrängungsraum und dem Ausgleichsraum zumindest hubrichtungsabhängig ist und wobei das Kolbendichtelement beim Druckaufbau im Verdrängungsraum den Verdrängungsraum und den Ausgleichsraum hermetisch voneinander isoliert.

Aus der DE 103 13 659 A1 ist eine derartige Verzögerungsvorrichtung bekannt. Die bei der Verzögerung aufgebauten Kräfte einer Vorrichtung können bei wiederholter Betätigung eine hohe Streubreite aufweisen.

Aus der US 2004/0032068 A1 ist ein Reibungsdämpfer bekannt, bei dem beim Ein- und Ausfahren des Kolbens beide Kolbenseiten über eine Drosselöffnung miteinander kommunizieren. Beim Einfahren des Kolbens wird zusätzlich die Kolbendichtung umströmt. Im kolbenstangenseitigen Raum herrscht Umgebungsdruck. Sobald der Druck in der Umgebung größer ist als im kolbenstangenseitigen Raum, wird die Kolbenstangendichtung aufgedrückt und Luft strömt aus der Umgebung in den kolbenstangenseitigen Raum.

In der US 5,697,477 ist der Ausgleichsraum ständig über Lufteintrittsöffnungen bzw. eine Durchgangsöffnung mit der Umgebung verbunden. Ein Unterdruck kann so nicht erzeugt werden.

Der vorliegenden Erfindung liegt daher die Aufgabe zugrunde, eine pneumatische Verzögerungsvorrichtung zu entwickeln, die eine geringe Streubreite der Verzögerungskräfte hat.

Diese Problemstellung wird mit den Merkmalen des Hauptanspruches gelöst. Dazu weist die Verzögerungsvorrichtung in der Kolbenendlage des maximalen Verdrängungsraums eine verschließbare pneumatische Verbindung auf, so dass in dieser Endlage der Verdrängungsraum und der Ausgleichsraum mittels dieser Verbindung mit der Umgebung kommunizieren. Außerdem dichtet die Kolbenstangendichtung bei geschlossener Verbindung den Zylinderinnenraum zur Erzeugung des Unterdrucks im Ausgleichsraum hermetisch gegen die Umgebung ab.

Weitere Einzelheiten der Erfindung ergeben sich aus den Unteransprüchen und der nachfolgenden Beschreibung schematisch dargestellter Ausführungsformen.
- Figur 1:: Längsschnitt einer Verzögerungsvorrichtung mit eingefahrener Kolbenstange;
- Figur 2:: Längsschnitt einer Verzögerungsvorrichtung mit ausgefahrener Kolbenstange;
- Figur 3:: Teilquerschnitt der Kolbenstange und der Kolbenstangendichtung;
- Figur 4:: Detail der Figur 2 im Zylinderkopfbereich.

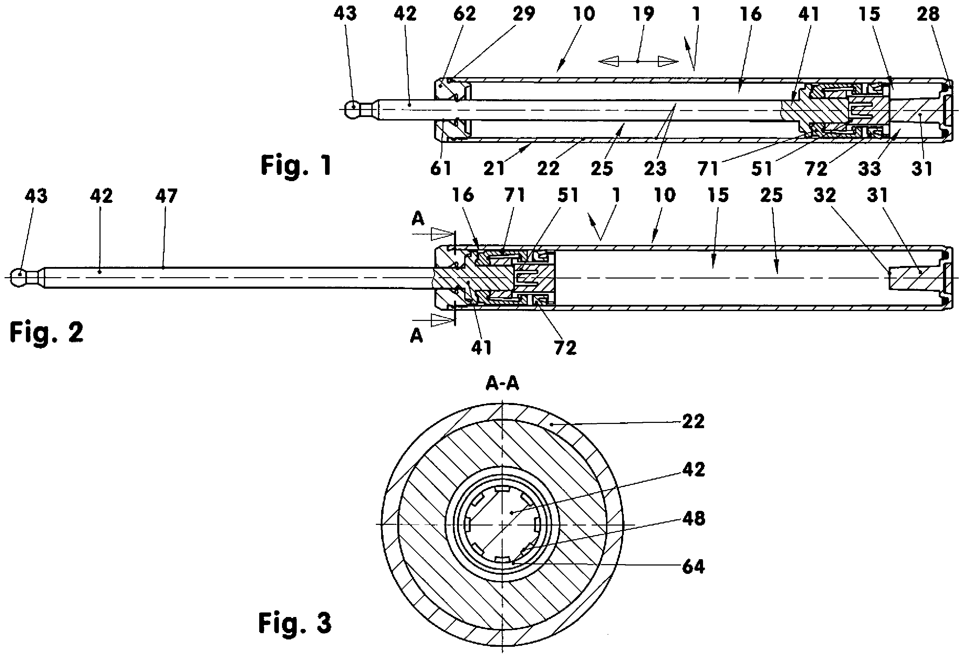

Die Figuren 1 - 4 zeigen eine Verzögerungsvorrichtung (10), die z.B. in einem hier nicht weiter dargestellten Führungssystem eingesetzt ist. Dieses Führungssystem führt und trägt beispielsweise eine Schublade eines Möbelstücks. Es umfasst außer der Verzögerungsvorrichtung (10) z.B. eine Einzugsvorrichtung. Beispielsweise beim Einschieben der Schublade umgreift vor dem Erreichen der Endlage die an der Schublade angeordnete Verzögerungsvorrichtung (10) einen im Möbelstück fest angeordneten Mitnehmer. Die Hubbewegung der Schublade relativ zum Möbelstück wird verzögert. Gleichzeitig oder nach dem Zurücklegen eines weiteren Teilhubes in Richtung der Endlage wird mittels der Schublade die Einzugsvorrichtung ausgelöst. Die Einzugsvorrichtung zieht entgegen der Wirkung der Verzögerungsvorrichtung (10) die Schublade in die z.B. geschlossene Endlage. Die Verzögerungsvorrichtung (10) bleibt hierbei z.B. bis zum Erreichen der Endlage im Eingriff mit dem Mitnehmer. Auch der Einsatz einer pneumatischen Verzögerungsvorrichtung (10) ohne Einzugsvorrichtung ist denkbar.

Die Verzögerungsvorrichtung (10) umfasst einen Zylinder (21), in dem eine Kolbeneinheit (41), bestehend aus einem Kolben (51) und einer Kolbenstange (42), geführt ist. Der Kolben (51) trägt zwei Kolbendichtelemente (71, 72). Der Kolbenstangenkopf (43) der z.B. weitgehend zylindrischen Kolbenstange (42) ist in diesem Ausführungsbeispiel als Kugelkopf (43) ausgebildet. An diesen Kugelkopf (43) kann ein Mitnahmeelement, eine Anschlagplatte, etc. angeschlossen werden.

Der Zylinder (21) umfasst einen topfförmigen Zylindermantel (22) mit einem integrierten Zylinderboden (28) und einem mittels einer Kolbenstangendichtung (62) verschlossenen Kopfteil (29). Er ist beispielsweise als Spritzgussteile aus thermoplastischem Kunststoff, z.B. Polyoximethylen, hergestellt. Der Zylindermantel (22) ist hier auf seiner Außenseite zylindrisch. Seine Länge beträgt beispielsweise das Fünfeinhalbfache des Durchmessers. Die nichtzylindrische Zylinderinnenwandung (23) ist z.B. in Form eines Kegelstumpfmantels ausgebildet. Die größere Querschnittsfläche dieses Kegelstumpfmantels befindet sich am Kopfteil (29) des Zylinders (21), die kleinere Querschnittsfläche am Zylinderboden (28). Die erstgenannte Querschnittsfläche beträgt z.B. 63 Quadratmillimeter. Die Steigung dieses Entformungskegels beträgt beispielsweise 1:65. Die Innenwandung (23) ist gegebenenfalls poliert. Die minimale Wandstärke des Zylindermantels (22) beträgt z.B. 7 % seines Außendurchmessers.

Der Zylinderboden (28) hat einen in den Zylinderinnenraum (25) ragenden, kegelstumpfförmigen Stempel (31) mit einer Stempelstirnfläche (32). Dieser begrenzt zusammen mit der Innenwandung einen Ringraum (33). Die Querschnittsfläche des Ringraums (33) beträgt 80 % der größeren Querschnittsfläche des Kegelstumpfmantels. Seine Länge beträgt z.B. ein Siebtel des Kolbenhubs. Der Zylinder (21) kann auch ohne Stempel (31) ausgeführt sein.

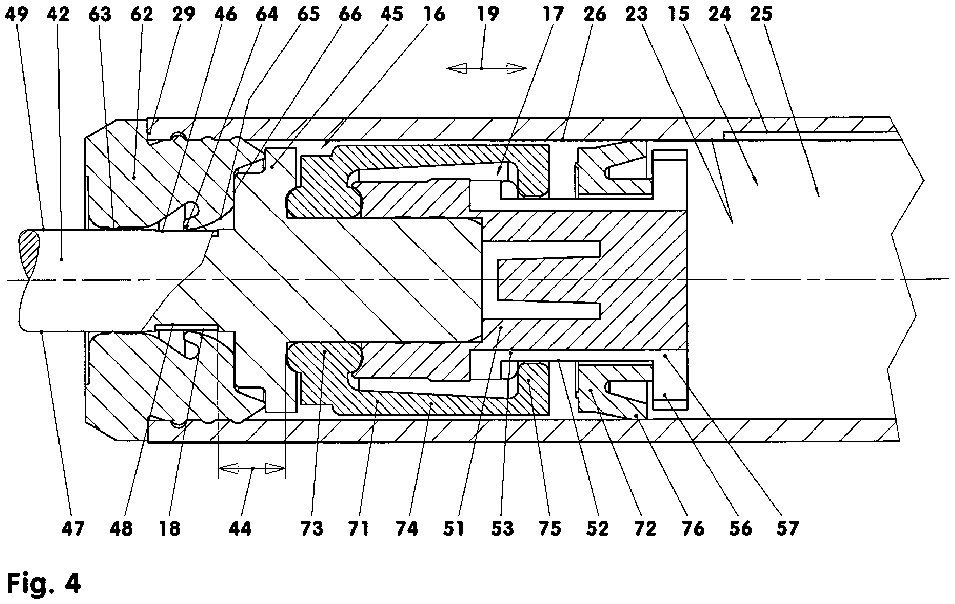

In der Zylinderinnenwandung (23) ist hier eine Längsnut (24) angeordnet, vgl. Figur 4. Ihre Länge beträgt beispielsweise 60 % der Zylinderlänge und endet je nach Ausführung des Zylinders (21) in der Ebene der Stempelstirnfläche (32) oder am Zylinderboden (28). Ihre Breite beträgt z.B. 2 % des größeren Durchmessers der Zylinderinnenwandung (23). Die Tiefe der Nut (24) beträgt in diesem Ausführungsbeispiel ein Viertel ihrer Breite. Die Nut (24) ist zur Innenwandung (23) hin scharfkantig, der Nutauslauf hat beispielsweise eine Steigung von 45 Grad. Statt einer einzelnen Nut (24) können auch mehrere Nuten (24) an der Innenwandung (23) angeordnet sein. Auch können sich diese z.B. schraubenlinienförmig an der Innenwandung (23) des Zylindermantels (22) entlangwinden.

Die Kolbenstangendichtung (62) hat einen außenliegenden Abstützring (63) und eine innenliegende Dichtlippe (64). Sie bildet die Kolbenstangendurchführung (61). Der Abstützring (63) liegt nichtabdichtend an der Kolbenstange (42) an. Die nach außen zeigende Dichtlippe (64) umgreift die Kolbenstange (42) und dichtet in der in der Figur 1 dargestellten eingefahrenen Kolbenlage den Zylinderinnenraum (25) hermetisch gegen die Umgebung (1) ab. Ein nichtabdichtender Anschlagring (66) ist in Richtung des Zylinderinnenraums (25) orientiert.

Der Kolben (51) und die Kolbenstange (42) der Kolbeneinheit (41) sind beispielsweise formschlüssig und stoffschlüssig miteinander verbunden, sie können miteinander verklebt sein.

Die Gesamtlänge der Kolbeneinheit (41) ist z.B. um 5 % länger als die Länge des Zylinders (21). Die Querschnittsfläche der beispielsweise aus Kunststoff hergestellten Kolbenstange (42) beträgt im Ausführungsbeispiel ein Achtel des Innenquerschnitts des Zylinders (21) am Zylinderkopf (29). Die Kolbenstange (42) kann biegbar sein.

Die beiden Kolbendichtelemente (71, 72) sind zwischen einer Anschlagschulter (45) der Kolbeneinheit (41) und einer zum Verdrängungsraum (15) orientierten Bundscheibe (56) angeordnet. Das erste Kolbendichtelement (71) ist topfförmig ausgebildet. Es sitzt mit einem Einspannbereich (73) fest zwischen der Kolbenstange (42) und dem Kolben (51). An diesen Einspannbereich (73) schließt sich ein zumindest annähernd zylindermantelförmiger Manschettenbereich (74) an, der einen Verformungsbereich (74) bildet. Ein nach innen ragender Stützring (75) begrenzt dieses Kolbendichtelement (71) in der Längsrichtung (19). Dieser Stützring (75) ist in einer umlaufenden Kolbenausnehmung (52) geführt.

Das zweite Dichtelement (72) sitzt in der Darstellung der Figur 4 beabstandet zum ersten Dichtelement (71) in der Kolbenausnehmung (52). Dies ist ein in Richtung des Verdrängungsraums (15) geöffneter Wellendichtring (72) mit einem außenliegenden Dichtkragen (76). Die Kolbendichtelemente (71, 72) sind beispielsweise aus Nitril-Butadien-Kautschuk mit halogenisierter Oberfläche hergestellt. Die beiden Kolbendichtelemente (71, 72) können auch als ein gemeinsames Bauteil ausgebildet sein. Die Gesamtlänge der unbelasteten, voneinander beabstandeten Kolbendichtelemente (71, 72) ist im Folgenden als maximale Länge der Kolbendichtelemente (71, 72) bezeichnet.

Der Kolben (51) hat im Bereich der Kolbenausnehmung (52) zwei einander gegenüberliegende Längsnuten (53), die mit Aussparungen (57) der Bundscheibe (56) fluchten. Diese Längsnuten (53) verbinden den Druckraum (17) des ersten Kolbendichtelements (71) mit dem Verdrängungsraum (15).

Die Kolbenstange (42) hat in dem an die Anschlagschulter (45) angrenzenden Abschnitt (46) in ihrer Mantelfläche (47) Längskanäle (48). Die Länge der z.B. gleichmäßig am Umfang verteilten Längskanäle (48) entspricht beispielsweise der Dicke der Zylinderkopfdichtung (62) in einer Richtung parallel zur Kolbenstange (42). Die Länge des mindestens einen Längskanals (48) entspricht beispielsweise der Länge der Dichtlippe (64) einschließlich ihres nichtanliegenden Bereichs (65). Der Längskanal (48) ragt jedoch in Richtung des Kolbenstangenkopfs (43) aus der Dichtlippe (64) heraus. Seine Tiefe beträgt beispielsweise 3 % des Durchmessers der Kolbenstange (42), seine Breite 16 % des Kolbenstangendurchmessers. Der Gesamtquerschnitt der Längskanäle (48) beträgt damit 5 % des Kolbenstangenquerschnitts.

Anstatt der hier beschriebenen Längskanäle (48) kann die Kolbenstange (42) auch spiralförmig angeordnete Kanäle (48) aufweisen. Diese können gleich- oder gegenläufig sein, sie können sich schneiden oder durchdringen, etc.

Im Ausführungsbeispiel ist in Längsrichtung (19) der Verzögerungsvorrichtung (10) der Abstand der Dichtlippe (64) der Zylinderkopfdichtung (62) zum Beginn der Nut (24) in der Zylinderinnenwandung (23) um drei Millimeter länger als der Abstand des Beginns der Längskanäle (48) zur verdrängungsraumseitigen Ende des Dichtkragens (76) des zweiten Kolbendichtelements (72). Die letztgenannte Länge ist die Summe aus der Länge der Längskanäle (48), der Länge eines Übergangsbereichs (44) zwischen den Längskanälen (48) und den Kolbendichtelementen (71, 72) sowie der maximalen Länge aller Kolbendichtelemente (71, 72).

Nach der Montage begrenzen in diesem Ausführungsbeispiel der Kolben (51) und der Zylinderboden (28) den Verdrängungsraum (15). Der Kolben (51) und der Zylinderkopf (29) begrenzen einen Ausgleichsraum (16). Das Kolbendichtelement (71) und der Kolben (51) begrenzen nun einen Druckraum (17), der über die Längsnuten (53) und die Aussparungen (57) mit dem Verdrängungsraum (15) in Verbindung steht.

Ist der Kolben (51) der Verzögerungsvorrichtung (10) ausgefahren, vgl. Figuren 2 - 4, befindet sich dieser im Bereich des größeren Innendurchmessers des Zylinders (21). Beispielsweise liegt er im nutfreien, glatten Bereich (26) der Zylinderinnenwandung (23). Der Dichtkragen (76) berührt nichtabdichtend die Zylinderinnenwandung (23). Der Manschettenbereich (74) liegt unverformt mit beidseitigem radialem Spiel zwischen der Zylinderinnenwandung (23) und dem Kolben (51).

Beim eingefahrenen Kolben (51), vgl. Figur 1, liegen die Kolbendichtelemente (71, 72) nichtabdichtend im Bereich der Längsnut (24) an der Zylinderinnenwandung (23) an. Die Längsnut (24) verbindet hierbei den Verdrängungs- (15) und den Ausgleichsraum (16).

Beispielsweise nach dem Einbau in ein Möbelstück ist z.B. bei ausgefahrener Schublade die Verzögerungsvorrichtung (10) außer Eingriff mit dem Mitnehmer. Die Kolbeneinheit (51) liegt in ihrer in den Figuren 2 - 4 dargestellten ausgefahrenen Endlage. Hierbei kann die Anschlagschulter (45) an der Kolbenstangendichtung (62) anliegen. Die Verzögerungsvorrichtung (10) kann aber auch derart ausgebildet sein, dass in der ausgefahrenen Endlage der Kolbeneinheit (41) die Anschlagschulter (45) beispielsweise um 2 bis 3 Millimeter beabstandet von der Kolbenstangendichtung (62) ist. Hierfür kann z.B. ein mechanischer Anschlag an der Kolbenstange (42) außerhalb oder innerhalb des Zylinders (21) angeordnet sein.

Beispielsweise beim Schließen der Schublade umgreift in einem an die geschlossene Endlage der Schublade angrenzenden Teilhub des Gesamthubes der Mitnehmer den Kolbenstangenkopf (43) oder ein an diesem angeordnetes Mitnahmeelement.

Die Kolbenstange (42) wird unter dem Einfluss der externen Kraft eingefahren. Der Kolben (51) wird hierbei vom Zylinderkopf (29), vgl. Figur 2 - 4, in Richtung des Zylinderbodens (28), vgl. Figur 1, verschoben. Hierbei wird das Volumen des Verdrängungsraumes (15) - in der Darstellung der Figuren 2 und 4 ist dieses Volumen maximal - vermindert. Der Gasdruck, z.B. der Luftdruck im Verdrängungsraum (15), erhöht sich und wirkt als interne Kraft auf das Kolbendichtelement (71). Nach dem Prinzip der Selbsthilfe wird unmittelbar mit dem Beginn der Einfahrbewegung der Kolbenstange (42) der Dichtkragen (76) unter Verformung an die Zylinderinnenwandung (23) angepresst. Der Verdrängungsraum (15) und der Ausgleichsraum (16) werden quasi hermetisch voneinander isoliert. Sobald die Dichtlippe (64) den zylindrischen Abschnitt (49) der Kolbenstange (42) erreicht hat, wird mittels der Kolbenstangendichtung (62) der Ausgleichsraum (16) hermetisch gegen die Umgebung (1) abgedichtet. Bei der weiteren Einfahrbewegung des Kolbens (51) wird im Ausgleichsraum (16) ein Unterdruck erzeugt.

Der Druck, der sich im Verdrängungsraum (15) aufbaut, wirkt auch auf die Innenfläche der Bremsmanschette (71). Der Manschettenbereich (74) wird radial nach außen gewölbt und an die Innenwandung (23) angepresst.

Bei der Verformung der Bremsmanschette (71) wird das Kolbendichtelement (71) in axialer Richtung verkürzt. Der Stützring (75) wandert entlang der z.B. kegelstumpfförmigen Kolbenausnehmung (52) in Richtung der Kolbenstange (42) und drückt dabei den Verformungsbereich (74) zusätzlich radial nach außen, wobei die Bremswirkung der Bremsmanschette (71) verstärkt wird. Die Verbindungskanäle (53, 57) werden nicht unterbrochen, so dass der Verdrängungsraum (15) und der Druckraum (17) während des gesamten Hubes miteinander kommunizieren.

Beim weiteren Einfahren der Kolbenstange (42) bewirken der an der Zylinderinnenwandung (23) angepresste Dichtkragen (76) und die an der Zylinderinnenwandung (23) anliegende Bremsmanschette (71) eine hohe Verzögerung der Kolbenhubbewegung. Die Schublade wird stark abgebremst.

Mit zunehmendem Hub der Kolbenstange (42) erreicht der Dichtkragen (76) des Kolbendichtelements (72) den Beginn der Längsnut (24). Sobald der Dichtkragen (76) den hinteren Rand des Drosselkanals (24) passiert hat, wird Luft aus dem Verdrängungsraum (15) über den Drosselkanal (24) in den Ausgleichsraum (16) verdrängt. Der Druck im Verdrängungsraum (15) fällt z.B. schlagartig ab. Die Bremsmanschette (71) kann hierbei noch an der Zylinderinnenwandung (23) anliegen. Das aus dem Verdrängungsraum (15) verdrängte Volumen der Luft ist größer als das Volumen, um das der Ausgleichsraum (16) mit der ihn durchdringenden Kolbenstange (42) vergrößert wird. Der Druck im Ausgleichsraum (16) wird erhöht. Hierbei kann Luft aus dem Ausgleichsraum (16) durch die gegen die Umgebung (1) abdichtende Kolbenstangendichtung (62) hindurch in die Umgebung (1) entweichen.

Sobald sich das Kolbendichtelement (71) vollständig von der Innenwandung (23) gelöst hat, strömt zusätzlich Luft aus dem Verdrängungsraum (15) in den Ausgleichsraum (16). Das Kolbendichtelement (71) nimmt wieder seine Ausgangslage vor dem Beginn der Hubbewegung an. Die Schublade hat jetzt eine geringe Restgeschwindigkeit. In der Endlage bleibt sie ohne Rückprall stehen.

Während der Verzögerung der Hubbewegung kann die Schublade mit der Einzugsvorrichtung koppeln. Diese umfasst beispielsweise eine Feder, die eine zusätzliche interne Kraft auf die Führungsvorrichtung ausübt. Auf die Verzögerungsvorrichtung (10) wirkt diese Kraft als externe Kraft.

Nach einem längeren Zeitintervall ohne weitere Betätigung der Verzögerungsvorrichtung (10) gleicht sich der Druck im Verdrängungsraum (15) und im Ausgleichsraum (16) dem Umgebungsdruck an. Es besteht keinerlei Gefahr, dass in der Ruhelage z.B. bei Materialermüdung die Verzögerungsvorrichtung (10) durch inneren Unter- oder Überdruck birst.

Wird die Schublade wieder ausgezogen, strömt Luft aus dem Ausgleichsraum (16) über den Drosselkanal (24) in den Verdrängungsraum (15). Das Kolbendichtelement (71) bleibt weitgehend unverformt und hat zumindest während eines großen Teils des Hubes keinen Kontakt mit der Zylinderinnenwandung (23). Da während der Ausfahrbewegung die Luft weitgehend ungehindert aus dem Ausgleichsraum (16) in den Verdrängungsraum (15) strömt, verläuft die Auszugsbewegung zumindest annähernd widerstandsfrei.

Während des Ausfahrens der Kolbeneinheit (41) wird der Ausgleichsraum (16) verkleinert und der Verdrängungsraum (15) vergrößert. Aufgrund des Volumens der Kolbenstange (42) ist das Volumen der verdrängten Luft kleiner als das Volumen, um das der Verdrängungsraum (15) vergrößert wird. Der Luftdruck im Verdrängungsraum (15) und im Ausgleichsraum (16) nimmt ab.

Kurz vor dem Erreichen der ausgefahrenen Endlage der Kolbeneinheit (41) - der Verdängungsraum (15) hat sein maximales Volumen - erreicht die Dichtlippe (64) der Kolbenstangendichtung (62) die mindestens eine Längsnut (48) auf der Kolbenstange (42). Hiermit wird eine pneumatische Verbindung (18) zwischen dem Zylinderinnenraum (25) und der Umgebung (1) geöffnet. Aus der Umgebung (1) strömt Luft in den Ausgleichsraum (16) und in den Verdrängungsraum (15). Der Luftdruck in diesen Räumen (15, 16) gleicht sich an den Umgebungsdruck an.

Sobald die Kolbenstange (42) vollständig ausgefahren ist, löst sich das kolbenstangenseitige Mitnahmlement vom möbelstückseitigen Mitnehmer. Die Verzögerungsvorrichtung (10) kommt außer Eingriff. Die Kolbenstange (42) der Verzögerungsvorrichtung (10) ist nun ausgefahren. Die Einzugsvorrichtung ist gelöst.

Beim Wiedereinfahren des Kolbens (51) wird zunächst wieder die pneumatische Verbindung (18) des Zylinderinennraums (25) mit der Umgebung (1) verschlossen. Die Dichtlippe (64) gelangt auf den zylindrischen Bereich (49) der Kolbenstange (42). Erst beim weiteren Einfahren der Kolbeneinheit (41) gelangt der Dichtkragen (76) des Wellendichtrings (72) an die Längsnut (24) der Zylinderinnenwandung (23).

Damit herrscht im Verdrängungsraum (15) bei Beginn jedes Verzögerungshubs der Umgebungsdruck. Die Verzögerungsvorrichtung (10) hat damit eine wiederholbare und konstante Leistung.

Anstatt der Längskanäle (48) auf der Kolbenstange (42) kann die elastisch verformbare Kolbenstange (42) in der ausgefahrenen Endlage aus der gestreckten Lage gebogen werden. Hierbei wird die Kolbenstangendichtung (62) verformt und undicht, so dass zum Druckausgleich Luft aus der Umgebung (1) in den Ausgleichsraum (16) und in den Verdrängungsraum (15) strömen kann.

Auch ist es denkbar, in der ausgefahrenen Endlage der Kolbeneinheit (41) ein separates Ventil zu öffnen. Dieses kann z.B. in der Kolbenstangendichtung (62) integriert sein.

Die Verzögerungsvorrichtung (10) kann auch derart aufgebaut sein, dass der Verdrängungsraum (15) zwischen dem Kolben (51) und der Kolbenstangendichtung (62) angeordnet ist. Die Kolbenstange (42) durchdringt den Verdrängungsraum (15). Der Ausgleichsraum (16) befindet sich zwischen dem Kolben (51) und dem Zylinderboden (28).

In einer derartigen Verzögerungsvorrichtung (10) erfolgt eine Verzögerung beim Herausziehen der Kolbenstange (42). Der nutfreie Bereich der Zylinderinennwandung (23) grenzt an den Zylinderboden an. In dieser Ausführungsform sind die Längskanäle (48) auf der Kolbenstange (42) z.B. in der Nähe des Kolbenstangenkopfes (43) angeordnet. Es ist auch in diesem Ausführungsbeispiel denkbar, die Kolbenstange (42) zu verformen oder in die Kolbenstangendichtung (62) ein Ventil anzuordnen, um in der Endlage der Kolbeneinheit (41) eine pneumatische Verbindung (18) zwischen dem Verdrängungsraum (15) und der Umgebung (1) herzustellen.

Die hier beschriebene Verzögerungsvorrichtung (10) kann Teil eines Führungssystems sein.

### Bezugszeichenliste:

- 1: Umgebung

- 10: Verzögerungsvorrichtung

- 15: Verdrängungsraum
- 16: Ausgleichsraum
- 17: Druckraum
- 18: pneumatische Verbindung
- 19: Längsrichtung

- 21: Zylinder
- 22: Zylindermantel
- 23: Zylinderinnenwandung
- 24: Längsnut, Drosselkanal
- 25: Zylinderinnenraum
- 26: nutfreier Bereich von (23)

- 28: zylinderboden
- 29: Kopfteil, Zylinderkopf

- 31: Stempel
- 32: Stempelstirnfläche
- 33: Ringraum

- 41: Kolbeneinheit
- 42: Kolbenstange
- 43: Kolbenstangenkopf, Kugelkopf
- 44: Übergangsbereich
- 45: Anschlagschulter
- 46: Abschnitt von (42)
- 47: Mantelfläche
- 48: Längskanäle
- 49: zylindrischer Abschnitt von (42)

- 51: Kolben
- 52: Kolbenausnehmung
- 53: Längsnuten

- 56: Bundscheibe
- 57: Aussparungen, Verbindungskanal

- 61: Kolbenstangendurchführung
- 62: Kolbenstangendichtung, Zylinderkopfdichtung
- 63: Abstützring
- 64: Dichtlippe
- 65: nichtanliegender Bereich von (64)
- 66: Anschlagring

- 71: Kolbendichtelement, erstes Dichtelement, Bremsmanschette
- 72: Kolbendichtelement, zweites Dichtelement, Wellendichtring
- 73: Einspannbereich
- 74: Manschettenbereich, Verformungsbereich
- 75: Stützring
- 76: Dichtlippe, Dichtkragen

## Patentansprüche

1. Pneumatische Verzögerungsvorrichtung (10) mit einem Zylinder (21) und mit einem in diesem mittels einer von einer Kolbenstangendichtung (62) mit einer in Richtung eines Kolbenstangenkopfes (43) zeigenden Dichtlippe (64) umgriffenen Kolbenstange (42) geführten, mit mindestens einem Kolbendichtelement (71; 72) ausgestatteten, einen Verdrängungsraum (15) gegen einen Ausgleichsraum (16) abgrenzenden Kolben (51), die durch Überdruck im Verdrängungsraum (15) und Unterdruck im Ausgleichsraum (16) eine der Hubbewegung des Kolbens (51) entgegengesetzte Kraft aufbaut, wobei der Leckagestrom zwischen dem Verdrängungsraum (15) und dem Ausgleichsraum (16) zumindest hubrichtungsabhängig ist und wobei das Kolbendichtelement (71; 72) beim Druckaufbau im Verdrängungsraum (15) den Verdrängungsraum (15) und den Ausgleichsraum (16) quasi hermetisch voneinander isoliert, **dadurch gekennzeichnet,**
- **dass** die Verzögerungsvorrichtung (10) in der Kolbenendlage des maximalen Verdrängungsraums (15) eine verschließbare pneumatische Verbindung (18) aufweist, so dass in dieser Endlage der Verdrängungsraum (15) und der Ausgleichsraum (16) mittels dieser Verbindung (18) mit der Umgebung (1) kommunizieren und
- **dass** die Kolbenstangendichtung (62) bei geschlossener Verbindung (18) den Zylinderinnenraum (25) zur Erzeugung des Unterdrucks im Ausgleichsraum (16) hermetisch gegen die Umgebung (1) abdichtet.

2. Verzögerungsvorrichtung (10) nach Anspruch 1, **dadurch gekennzeichnet, dass** die pneumatische Verbindung (18) in der Kolbenstangendichtung (62) und/oder in der Kolbenstange (42) angeordnet ist.

3. Pneumatische Verzögerungsvorrichtung (10) nach Anspruch 1, **dadurch gekennzeichnet, dass** die pneumatische Verbindung (18) durch mindestens einen auf der Kolbenstange (42) angeordneten Längskanal (48) gebildet wird.

4. Pneumatische Verzögerungsvorrichtung (10) nach Anspruch 3, **dadurch gekennzeichnet, dass** die Länge des Längskanals (48) kürzer ist als 5 % des Kolbenhubs.

5. Pneumatische Verzögerungsvorrichtung (10) nach Anspruch 1, **dadurch gekennzeichnet, dass** der Zylinder (21) eine Zylinderinnenwandung (23) mit mindestens einer in Längsrichtung (19) orientierten Längsnut (24) hat, wobei die Länge der Längsnut (24) maximal 90 % der Länge des Zylinders (21) beträgt und wobei der Kolben (51) in der Endlage des maximalen Verdrängungsraums (15) in einem nutfreien Bereich (26) der Zylinderinnenwandung (23) liegt.

6. Pneumatische Verzögerungsvorrichtung (10) nach den Ansprüchen 2, 4 und 5, **dadurch gekennzeichnet, dass** die Summe der Länge des Längskanals (48), der maximalen Länge aller Kolbendichtelemente (71, 72) sowie der Länge eines Übergangsbereichs (44) kürzer ist als der in Längsrichtung (19) gemessene Abstand der Einlippendichtung (64) zum vedrängungsraumseitigen Ende des nutfreien Bereichs (26) der Zylinderinnenwandung (23).

## Claims

1. A pneumatic deceleration device (10) having a cylinder (21) and having a piston (51), which is guided in this cylinder by means of a piston rod (42) surrounded by a piston rod seal (62) having a sealing lip (64) pointing toward a piston rod head (43) and which is equipped with at least one piston sealing element (71; 72) and which delimits a displacement space (15) with respect to a compensation space (16), which device builds up a force opposing the stroke movement of the piston (51) by positive pressure in the displacement space (15) and negative pressure in the compensation space (16), wherein the slippage between the displacement space (15) and the compensation space (16) is at least dependent on the stroke direction and wherein the piston sealing element (71; 72) isolates the displacement space (15) and the compensation space (16) virtually hermetically from each other as pressure builds up in the displacement space (15), **characterized in that**
- the deceleration device (10), in the piston end position of the maximum displacement space (15), has a pneumatic connection (18) capable of being closed such that in this end position, the displacement space (15) and the compensation space (16) communicate with the environment (1) by means of this connection (18) and
- when the connection (18) is closed, the piston rod seal (62) seals the cylinder inner chamber (25) hermetically with respect to the environment (1) in order to generate the negative pressure in the compensation space (16).

2. The deceleration device (10) according to Claim 1, **characterized in that** the pneumatic connection (18) is arranged in the piston rod seal (62) and/or in the piston rod (42).

3. The pneumatic deceleration device (10) according to Claim 1, **characterized in that** the pneumatic connection (18) is formed by at least one longitudinal channel (48) arranged on the piston rod (42).

4. The pneumatic deceleration device (10) according to Claim 3, **characterized in that** the length of the longitudinal channel (48) is less than 5 % of the piston stroke.

5. The pneumatic deceleration device (10) according to Claim 1, **characterized in that** the cylinder (21) has a cylinder inner wall (23) having at least one longitudinal groove (24) oriented in a longitudinal direction (19), wherein the length of the longitudinal groove (24) is at most 90 % of the length of the cylinder (21) and wherein the piston (51) is in a groove-free area (26) of the cylinder inner wall (23) in the end position of the maximum displacement space (15).

6. The pneumatic deceleration device (10) according to Claims 2, 4 and 5, **characterized in that** the sum of the length of the longitudinal channel (48), the maximum length of all piston sealing elements (71, 72) and the length of a transition area (44) is less than the distance, measured in the longitudinal direction (19), of the mono-lip seal (64) to the displacement space-side end of the groove-free area (26) of the cylinder inner wall (23).

## Revendications

1. Dispositif d'amortissement pneumatique (10) comportant un cylindre (21) et un piston (51) guidé dans ce cylindre à l'aide d'une tige de piston (42) entourée d'une lèvre d'étanchéité (64) orientée vers une tête de tige de piston (43), comportant au moins un élément d'étanchéité du piston (71; 72) délimitant une chambre de refoulement (15) par rapport à une chambre de compensation (16), qui établit une force opposée à la course du piston (51) par surpression dans la chambre de refoulement (15) et par dépression dans la chambre de compensation (16), le courant de fuite entre la chambre de refoulement (15) et la chambre de compensation (16) dépendant au moins de la direction de la course
et l'élément d'étanchéité du piston (71; 72) isole la chambre de refoulement (15) et la chambre de compensation (16) quasi hermétiquement lors de la montée de la pression dans la chambre de refoulement (15),
**caractérisé en ce**
- **que** le dispositif d'amortissement (10) présente une liaison pneumatique obturable (18) dans la position de fin de course du piston de la chambre maximale de refoulement (15), de sorte que la chambre de refoulement (15) et la chambre compensation (16), dans cette position finale, peuvent communiquer avec l'extérieur (1) à l'aide de cette liaison et
- **que** le joint de la tige de piston (62), lorsque la liaison (18) est fermée, ferme l'espace intérieur du cylindre (25) hermétiquement contre l'espace extérieur (1) afin de produire la dépression dans la chambre de compensation (16).

2. Dispositif d'amortissement (10) selon la revendication 1, **caractérisé en ce que** la liaison pneumatique (18) est disposée dans le joint de la tige du piston (62) et/ou dans la tige du piston (42).

3. Dispositif d'amortissement (10) selon la revendication 1, **caractérisé en ce que** la liaison pneumatique (18) est formée par au moins un canal longitudinal (42) disposé sur la tige du piston (42).

4. Dispositif d'amortissement 10) selon la revendication 3, **caractérisé en ce que** la longueur du canal longitudinal (48) est inférieure à 5 % de la course du piston.

5. Dispositif d'amortissement (10) selon la revendication 1, **caractérisé en ce que** le cylindre (21) a une paroi intérieure de cylindre (23) comportant au moins une rainure longitudinale (24) orientée dans le sens de la longueur (19), la longueur de la rainure longitudinale (24) étant au maximum de 90 % de la longueur du cylindre (21) et le piston (51) dans la position finale de l'espace de refoulement maximal (15) se trouvant dans une zone sans rainure (26) de la paroi intérieure du cylindre (23).

6. Dispositif d'amortissement (10) selon les revendications 2, 4 et 5, **caractérisé en ce que** la somme de la longueur du canal longitudinal (48), de la longueur maximale de tous les éléments d'étanchéité de piston (71, 72) ainsi que de la longueur d'une zone de transition (44) est inférieure à la distance mesurée dans le sens longitudinal du joint monolèvre (64) par rapport à l'extrémité de la zone sans rainure (26) du côté chambre de refoulement de la paroi intérieur du cylindre (23).
